Europäisches Patentamt

European Patent Office

Office européen des brevets

(11) Publication number: **0 057 569**
**B1**

(12) **EUROPEAN PATENT SPECIFICATION**

(45) Date of publication of patent specification: **13.01.88**

(21) Application number: **82300423.9**

(22) Date of filing: **27.01.82**

(51) Int. Cl.⁴: **G 01 T 3/00**, G 01 N 23/08

(54) Apparatus for measuring neutrons and gamma rays.

(30) Priority: **28.01.81 JP 10212/81**

(43) Date of publication of application:
**11.08.82 Bulletin 82/32**

(45) Publication of the grant of the patent:
**13.01.88 Bulletin 88/02**

(84) Designated Contracting States:
**DE FR**

(56) References cited:
**DE-A-2 628 002**
**DE-B-2 324 383**
**GB-A-1 284 295**
**GB-A-1 387 007**
**US-A-4 217 496**

(73) Proprietor: **Hitachi, Ltd.**
**5-1, Marunouchi 1-chome**
**Chiyoda-ku Tokyo 100 (JP)**

(73) Proprietor: **Japan Atomic Energy Research Institute**
**2-2, Uchisaiwaicho 2-chome**
**Chiyoda-ku, Tokyo (JP)**

(72) Inventor: **Tominaga, Hiroshi**
**3600-172, Oaza Nakane**
**Katsuta-shi (JP)**
Inventor: **Sase, Yoshihiro**
**663, Ichige**
**Katsuta-shi (JP)**
Inventor: **Horiuchi, Shoichi**
**2920-23 Mawatari**
**Katsuta-shi (JP)**

(74) Representative: **Paget, Hugh Charles Edward et al**
**MEWBURN ELLIS & CO. 2/3 Cursitor Street**
**London EC4A 1BQ (GB)**

## Description

The present invention relates to an apparatus for measuring neutrons and gamma rays in which neutrons and gamma rays emitted from a radioactive isotope are detected by a single detector, output pulses from the detector are separated into two parts, one of which is generated by the neutrons and the other is generated by the gamma rays, and each of these parts is counted.

For example, British Patent No. GB—A—1,387,007 discloses a method and an apparatus for determining the moisture content of a sintered material in which neutrons and gamma rays are detected by a single detector, and then the neutrons are discriminated from the gamma rays.

However, it has become clear that, with the method and apparatus disclosed in British Patent No. GB—A—1,387,007, the discrimination characteristic for discriminating between neutrons and gamma rays is affected by a change in ambient temperature, and further that the detected value of neutrons and the detected value of gamma rays are both affected by a change in the linear gain of an amplifier and by other factors.

US—A—4217496 also discloses an apparatus for measuring neutrons and gamma rays. A detector detects both neutrons and gamma rays and generates pulses which are fed to a circuit means which converts those pulses to pulses whose weight depends on the decay time of the original pulse. Pulse height discriminator channels discriminate between pulses due to neutrons and those due to gamma rays and generate output pulses corresponding to each type of detection event. The output pulses are then counted. Thus this document corresponds to the pre-characterising portion of claim 1.

As with GB—A—1387007, however, changes in ambient temperature affect the results obtained by this apparatus.

Therefore the present invention, proposes an apparatus for measuring neutrons and gamma rays, comprising:

a detector for detecting both neutrons and gamma rays and generating detection pulses;

circuit means for receiving the detection pulses the circuit means including a converter for converting at least some of the detection pulses into corresponding processing pulses, each processing pulse having a characteristic dependent on the decay time of the corresponding detection pulse;

discriminator channels for receiving the processing pulses, discriminating on the basis of decay time between processing pulses due to neutrons and processing pulses due to gamma rays, and generating output pulses on respective output lines representing neutron detection events and gamma ray detection events respectively; and means for counting the output pulses representative of neutrons and the output pulses representative of gamma rays;

characterised in that:

the apparatus includes ratioing circuit means for generating a ratio signal representing the ratio between a first number of output pulses representative of detection pulses having a first set of decay time characteristics and a second number of output pulses representative of detection pulses having a second set of decay time characteristics said detection pulses in said first and second numbers being due to either neutrons or gamma rays, the ratioing circuit means being connected to the circuit means whereby to control the circuit means so as to keep the ratio constant.

The ratio(s) generated will vary with ambient temperature, but by controlling the discrimination circuit so as to keep the ratio(s) constant it becomes possible to compensate for changes in ambient temperature.

Embodiments of the present invention will now be described in detail, by way of example, with reference to

Fig. 1 is a block diagram showing an embodiment of an apparatus for measuring neutrons and gamma rays according to the present invention.

Fig. 2 is a graph showing a pulse height distribution of pulses generated by neutrons and gamma rays.

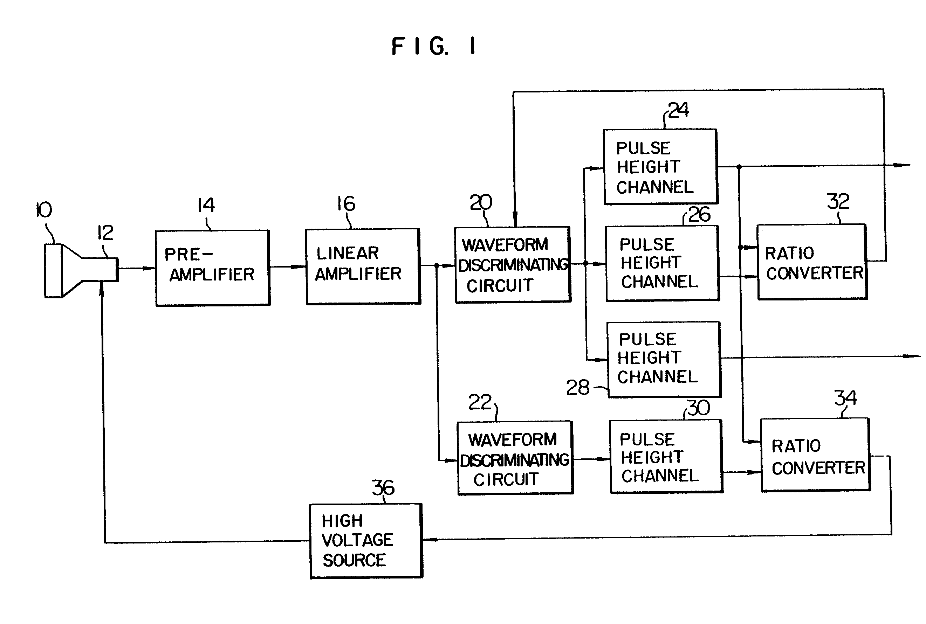

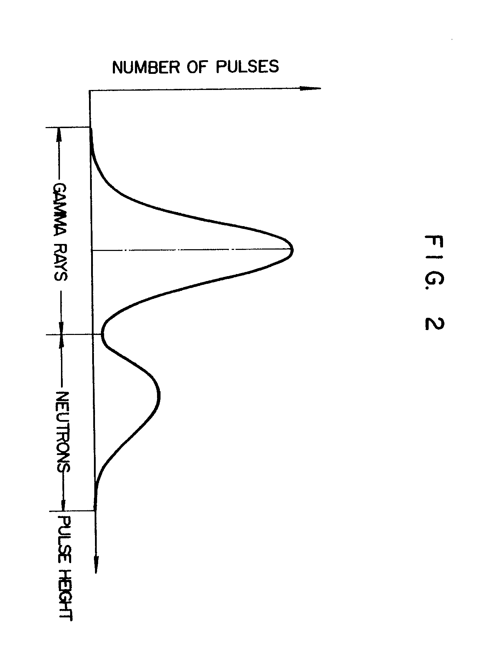

Referring to Fig. 1, pulses generated in an organic scintillator 10 by neutrons and gamma rays are applied to a waveform discriminating circuit 20 through a photomultiplier 12, a preamplifier 14 and a linear amplifier 16. The waveform discriminating circuit 20 includes therein a discriminator for input pulses, and the discriminator is adjusted so as to act as a low-level discriminator and pass only those pulses which are greater than a predetermined voltage level. The circuit 20 also includes a time-to-pulse converter which receives the pulses passed by the discriminator and converts the decay time of scintillation into a pulse height. It produces outputs whose pulse heights are distributed as shown in Fig. 2. The output pulses of the circuit 20 are applied to pulse height channels 24, 26 and 28, which are arranged to take up, respectively, the following pulse-height ranges of such output pulses. That is, the pulse height channel 24 is set so as to detect all output pulses from the circuit 20 which are generated by gamma rays, the pulse height channel 26 is set so as to detect output pulses which are generated by gamma rays and have pulse height values smaller than a pulse height corresponding to a maximum frequency at a pulse height distribution of pulses generated by gamma rays, and the pulse height channel 28 is so set as to detect all output pulses from the circuit 20 which are generated by neutrons. A waveform discriminating circuit 22 provided in parallel with the waveform discriminating circuit 20 includes therein a discriminator which is adjusted so as to act as a high-level discriminator, and pass only those pulses which are greater than a predetermined level higher than the voltage level of the discriminator of circuit 20. The position and width of a pulse height channel 30 which receives the output pulses of the waveform discriminating circuit 22 are set so as to detect all output pulses generated by gamma rays. Of these pulses height channels 24, 26, 28 and 30, channels 24 and 28 generate the number of pulses generated by gamma rays and the number of pulses generated by neutrons, respectively.

Next, the ratio of the number of pulses obtained from the pulse height channel 24 (i.e. the number of all pulses which are generated by gamma rays and which pass through the low-level discriminator circuit 20), to the number of pulses obtained from the pulse height channel 30 (i.e. the number of all pulses which are generated by gamma rays and which pass through the high-level discriminator of circuit 22), is converted into a d.c. voltage by a ratio converter 34. The d.c. voltage thus obtained is used to control a high voltage outputted from a high voltage source 36. In more detail, the ratio converter 34 is connected to the high voltage source 36 in such a manner that the high voltage outputted from the high voltage source 36 is decreased when a ratio of the number of pulses capable of passing through the high-level discriminator to the number of pulses capable of passing through the low-level discriminator is greater than a preset value, and is increased when the above-mentioned ratio is smaller than the preset value. Likewise, the ratio for the number of pulses obtained from the pulse height channel 24 (i.e. the number of all pulses which are generated by gamma rays and which pass through the low-level discriminator of circuit 20), to the number of pulses obtained from the pulse height channel 26 (i.e. the number of pulses generated by gamma rays and capable of passing through the low-level discriminator of circuit 20 which correspond to a lower half of a pulse height distribution of these pulses) is converted into a d.c. voltage by a ratio converter 32. The d.c. voltage is used to control the conversion gain of the time-to-pulse height converter included in the waveform discriminating circuit 20. That is to say, the ratio converter 32 is connected to the circuit 20 such that the conversion gain of the circuit 20 is increased when a ratio of the number of pulses corresponding to the lower half of the pulse height distribution to the number of all pulses generated by gamma rays and capable of passing through the low-level discriminator of circuit 20 is greater than a preset value, and is decreased when the above ratio is smaller than the preset value.

In the present embodiment, let us consider the case where the gain of the photomultiplier 12 is increased by a temperature change or the like. Although both the number of pulses having passed through the low-level discriminator of circuit 20 and the number of pulses having passed through the high-level discriminator of circuit 22 are increased, the increase in the number of the pulses which pass through the high-level discriminator of circuit 22 is greater than the increase in the number of pulses which pass through the low-level discriminator of circuit 20, since the increase in pulse height of each pulse caused by an increase in the linear gain of the photomultiplier is proportional to the pulse height. Accordingly, the ratio of the number of pulses which pass through the high-level discriminator of circuit 22 to the number of pulses which pass through the low-level discriminator of circuit 22 increases as the linear gain of the photomultiplier increases. At this time, the output voltage of the ratio converter 34 is increased, and the high voltage outputted from the high voltage source 36 is thereby decreased. In the case where the linear gain of the photomultiplier is decreased, a reverse operation is performed. Thus, the gain of the photomultiplier is so controlled as to be kept constant. In the above-mentioned explanation, a ratio of the number of pulses which have passed through the high-level discriminator and are generated by gamma rays, to the number of pulses which have passed through the low-level discriminator and are generated by gamma rays, is used. This is based upon the following fact. The number of pulses generated by gamma rays and the number of pulses generated by neutrons are both varied each time the measurement of neutrons and gamma rays is made, and therefore a pulse height distribution of pulses generated by both gamma rays and neutrons is varied each time the measurement is made. On the contrary, a pulse height distribution of pulses generated by gamma rays or a pulse height distribution of pulses generated by neutrons can be considered to be kept substantially constant in a limited measuring range. Further, let us consider the case where a pulse height distribution of pulses outputted from the waveform discriminating circuit 20 is moved toward a large pulse height region due to a temperature change or the like. The number of pulses outputted from the pulse height channel 26 for detecting pulses corresponding to a lower half of a pulse height distribution (shown in Fig. 2) of pulses generated by gamma rays is decreased in a great degree, since pulses corresponding to a peak region of the above-mentioned pulse height distribution are lost. On the other hand, the number of pulses outputted from the pulse height channel 26 for detecting all pulses generated by gamma rays is varied a little, since the pulses generated by gamma rays are discriminated from the pulses generated by neutrons at a trough of a pulse height distribution of pulses generated by both gamma rays and neutrons. Accordingly, a ratio of the number of pulses obtained from the pulse height channel 26 to the number of pulses obtained from the pulse height channel 24 is decreased, and the output voltage of the ratio converter 32 becomes low. Thus, a conversion gain at time-to-pulse height conversion performed in the waveform discriminating circuit 20 is decreased so that the pulse height distribution is returned to an initial place. A similar compensation is made in the case where the pulse height distribution of pulses outputted from the circuit 20 is moved toward a small pulse height region. Thus, the discrimination characteristic of the waveform discriminating circuit 20 is controlled so that a peak position and a trough position at a pulse height distribution of pulses generated by gamma rays are both fixed.

As mentioned above, according to the present invention, not only a discriminating characteristic for discriminating between pulses generated by gamma rays and pulses generated by neutrons but also a linear gain of a detecting, amplifying system may be controlled, and therefore a measuring apparatus may be formed which is not readily affected by a change in ambient temperature and by a change in linear gain of the above-mentioned system.

## Claims

1. An apparatus for measuring neutrons and gamma rays, comprising:

a detector (10, 12) for detecting both neutrons and gamma rays and generating detection pulses;

circuit means (20) for receiving the detection pulses the circuit means including a converter for converting at least some of the detection pulses into corresponding processing pulses, each processing pulse having a characteristic dependent on the decay time of the corresponding detection pulse;

discriminator channels (24, 28) for receiving the processing pulses, discriminating on the basis of decay time between processing pulses due to neutrons and processing pulses due to gamma rays, and generating output pulses on respective output lines representing neutron detection events and gamma ray detection events respectively; and means for counting the output pulses representative of neutrons and the output pulses representative of gamma rays;

characterised in that:

the apparatus includes ratioing circuit means (32) for generating a ratio signal representing the ratio between a first number of output pulses representative of detection pulses having a first set of decay time characteristics and a second number of output pulses representative of detection pulses having a second set of decay time characteristics said detection pulses in said first and second numbers being due to either neutrons or gamma rays, the ratioing circuit means being connected to the circuit means (20) whereby to control the circuit means (20) so as to keep the ratio constant.

2. An apparatus according to claim 1, wherein the characteristic of each processing pulse dependent on the decay time is the pulse height of the pulse; wherein the circuit means (20) includes a discriminator for discriminating detection pulses having a pulse height greater than a low level and passing only those processing pulses for which the corresponding detection pulse has a pulse height greater than the low level; and

wherein the apparatus further includes:

a further circuit means (22, 30) for discriminating detection pulses having a pulse height greater than a high level and passing only pulses for which the corresponding detection pulse has a pulse height greater than the high level;

and a further ratio circuit (34) for generating a further ratio signal representing the further ratio between the number of pulses due to gamma rays passed by the circuit means (20), and the number of pulses due to gamma rays passed by the further circuit means (22), the further ratioing circuit (34) being connected to the detector (10, 12) whereby to control the detector (10, 12) so as to keep the further ratio constant.

3. An apparatus according to either claim 1 or claim 2, wherein the first number of output pulses is the number of all detection pulses due to gamma rays passed by the circuit means, and the second number of output pulses is the number of detection pulses due to gamma rays passed by the circuit means and having particular decay characteristics.

## Patentansprüche

1. Apparat zur Messung von Neutronen und Gammastrahlen, umfassend

einen Detektor (10, 12), der sowohl Neutronen als auch Gammastrahlen erfaßt und Erfassungsimpulse erzeugt,

eine Schaltung (20), die die Erfassungsimpulse empfängt und einen Umsetzer zum Umsetzen mindestens einiger der Erfassungsimpulse in entsprechende Verarbeitungsimpulse aufweist, wobei jeder Verarbeitungsimpuls eine von der Abfallszeit des entsprechenden Erfassungsimpulses abhängige Charakteristik hat,

Diskriminatorkanäle (24, 28), die die Verarbeitungsimpulse empfangen, aufgrund der Abfallszeit zwischen auf Neutronen beruhenden und auf Gammastrahlen beruhenden Verarbeitungsimpulsen unterscheiden und auf entsprechenden Ausgangsleitungen Ausgangsimpulse erzeugen, die Neutronen- bzw. Gammastrahlen-Erfassungsvorgänge darstellen, und

eine Einrichtung zum Zählen der Neutronen angebenden Ausgangsimpulse und der Gammastrahlen angebenden Ausgangsimpulse,

dadurch gekennzeichnet, daß das Gerät eine Quotientenbildungsschaltung (32) zur Erzeugung eines Quotientsignals aufweist, das das Verhältnis zwischen einer ersten Anzahl von Erfassungsimpulse mit einer ersten Gruppe von Abfallszeit-Charakteristiken angebenden Ausgangsimpulsen und einer zweiten Anzahl von Erfassungsimpulse mit einer zweiten Gruppe von Abfallszeit-Charakteristiken angebenden Ausgangsimpulsen wiedergibt, wobei die in der ersten und der zweiten Anzahl vorliegenden Erfassungsimpulse entweder auf Neutronen oder auf Gammastrahlen beruhen, und wobei die Quotientenbildungsschaltung an die Schaltung (20) angeschlossen ist, um die Schaltung (20) so zu steuern, daß sie den Quotient konstant hält.

2. Apparat nach Anspruch 1, wobei die Charakteristik jedes von der Abfallszeit abhängigen Verarbeitungsimpulses die Impulshöhe dieses Impulses ist, wobei die Schaltung (20) einen Diskriminator zum Unterscheiden von Erfassungsimpulsen mit einer einen unteren Pegel überschreitenden Impulshöhe und Hindurchlassen nur derjenigen Verarbeitungsimpulse aufweist, für die der entsprechende Erfassungsimpuls eine den unteren Pegel überschreitende Impulshöhe aufweist, und wobei der Apparat weiterhin umfaßt

eine weitere Schaltung (20, 30) zum Unterscheiden von Erfassungsimpulsen mit einer einen oberen Pegel überschreitenden Impulshöhe und Hindurchlassen nur von Impulsen, für die der entsprechende Erfassungsimpuls eine den oberen Pegel überschreitende Impulshöhe aufweist, und

eine weitere Quotientenbildungsschaltung (34) zur Erzeugung eines weiteren Quotientensignals, das das weitere Verhältnis zwischen der Anzahl von auf Gammastrahlen beruhenden, von der Schaltung (20) hindurchgelassenen Impulsen und der Anzahl von auf Gammastrahlen beruhenden, von der weiteren Schaltung (22) hindurchgelassenen Impulsen wiedergibt, wobei die weitere Quotientenbildungsschaltung (34) an den Detektor (10, 12) angeschlossen ist, um den Detektor (10, 12) so zu steuern, daß er den weiteren Quotienten konstant hält.

3. Apparat nach Anspruch 1 oder 2, wobei die erste Anzahl von Ausgangsimpulsen die Anzahl sämtlicher auf Gammastrahlen beruhenden, von der Schaltung hindurchgelassenen Erfassungsimpulsen und die zweite Anzahl von Ausgangsimpulsen die Anzahl der auf Gammastrahlen beruhenden, von der Schaltung hindurchgelassenen und besondere Abfalls-Charakteristiken aufweisenden Erfassungsimpulsen ist.

**Revendications**

1. Appareil de mesure de neutrons et de rayons gamma, comportant:

— un détecteur (10, 12) servant à détecter à la fois des neutrons et des rayons gamma et produire des impulsions de détection;

— des moyens en forme de circuit (20) pour recevoir les impulsions de détection, ces moyens en forme de circuit comprenant un convertisseur servant à convertir au moins certaines des impulsions de détection en des impulsions de traitement correspondantes, chaque impulsion de traitement possédant une caractéristique dépendant du temps d'évanouissement de l'impulsion de détection correspondante;

— des canaux de discrimination (24, 28) servant à recevoir les impulsions de traitement et réalisant une différenciation, sur la base du temps d'évanouissement, entre des impulsions de traitement dues à des neutrons et des impulsions de traitement dues à des rayons gamma, et à produire, dans des lignes respectives de sortie, des impulsions de sortie représentant respectivement des phénomènes de détection de neutrons et des phénomènes de détection de rayons gamma; et

— des moyens pour compter les impulsions de sortie représentatives de neutrons et les impulsions de sortie représentatives de rayons gamma;

caractérisé en ce que:

— l'appareil comporte des moyens (32) en forme de circuit de formation d'un rapport, servant à former un signal de rapport représentant le rapport entre un premier nombre d'impulsions de sortie représentatives d'impulsions de détection possédant un premier ensemble de caractéristiques de temps d'évanouissement et un second nombre d'impulsions de sortie représentatives d'impulsions de détection possédant un second ensemble de caractéristiques de temps d'évanouissement, lesdites impulsions de détection desdits premier et second nombres étant dues soit à des neutrons, soit à des rayons gamma, les moyens en forme de circuit de formation d'un rapport étant raccordés aux moyens en forme de circuit (20) de manière à commander ainsi les moyens en forme de circuit (20) afin de maintenir le rapport constant.

2. Appareil selon la revendication 1, dans lequel la caractéristique de chaque impulsion de traitement, qui dépend de la durée d'évanouissement, est la hauteur de l'impulsion; et dans lequel les moyens en forme de circuit (20) comprennent un discriminateur servant à réaliser une différenciation entre des impulsions de détection possédant une hauteur supérieure à un niveau bas et à transmettre uniquement les impulsions de traitement, pour lesquelles l'impulsion de détection correspondante possède une hauteur supérieure au niveau bas; et dans lequel l'appareil comporte en outre:

— d'autres moyens en forme de circuits (22, 30) servant à différencier des impulsions de détection possédant une hauteur supérieure à un niveau élevé et à transmettre uniquement les impulsions pour lesquelles l'impulsion de détection correspondante possède une hauteur supérieure au niveau élevé; et

— un circuit (34) de formation d'un autre rapport, servant à produire un autre signal de rapport représentant l'autre rapport entre le nombre d'impulsions dues à des rayons gamma et ayant traversé les moyens en forme de circuit (20), et le nombre d'impulsions dues à des rayons gamma et ayant traversé les autres moyens en forme de circuits (22), le circuit (34) de formation de l'autre rapport étant raccordé au détecteur (10, 12) de manière à commander ce détecteur (10, 12) afin de maintenir l'autre rapport constant.

3. Appareil selon l'une ou l'autre des revendications 1 ou 2, dans lequel le premier nombre d'impulsions de sortie est le nombre de toutes les impulsions de détection dues à des rayons gamma et ayant traversé les moyens en forme de circuit, et le seconde nombre d'impulsions de sortie est le nombre d'impulsions de détection dues à des rayons gamma et ayant traversé les moyens en forme de circuit et possédant des caractéristiques particulières d'évanouissement.

# FIG. 1

# FIG. 2

NUMBER OF PULSES

GAMMA RAYS — NEUTRONS — PULSE HEIGHT